# EUROPEAN PATENT SPECIFICATION

(11) **EP 3 405 076 B1**
(45) Date of publication and mention of the grant of the patent: **22.11.2023**
(21) Application number: 17701956.9
(22) Date of filing: 11.01.2017
(51) Int. Cl.: A47J 27/026

(54) **OSCILLATION MINI-CHANNEL COOKWARE**
MINIKANAL-SCHWINGUNGSKOCHGESCHIRR
USTENSILES DE CUISINE À MINI-CANAL D'OSCILLATION

(30) Priority: 22.01.2016 US 201615004527
(43) Date of publication of application: 28.11.2018
(73) Proprietor: Teledyne Scientific & Imaging, LLC, Thousand Oaks, CA 91360 (US)
(72) Inventor: CAI, Steve, Newbury Park California 91320 (US); BHUNIA, Avijit, Newbury Park California 91320 (US)
(74) Representative: K&L Gates LLP
(86) International application number: PCT/US2017/012941
(87) International publication number: WO 2017/127265

(56) References cited:
- CA-A- 1 060 741
- US-A- 3 791 372
- US-A- 5 247 874
- US-A- 5 716 657
- US-A1- 2009 101 308

## Description

### BACKGROUND OF THE INVENTION

### Field of the Invention

This invention relates to cookware such as pots and griddles such as are used on top of electric, gas or induction stoves for cooking food, and more particularly to manufacturable, energy efficient, low-cost, lightweight and safe cookware with fast and uniform heating of the cooking surfaces.

### Description of the Related Art

To obtain satisfactory cooking results in an energy efficient manner, cookware should rapidly heat and maintain the bottom and any side wall surfaces at an approximately uniform temperature. To achieve the desired heating properties the cookware must exhibit a high thermal conductivity. This is particularly critical for heating cooking surfaces that are not in direct contact with the heat source. For example, remote regions of a large griddle or the side walls of a pot. Cookware is preferably lightweight and low-cost, and must be reliable and safe for consumers.

Commercially available cookware utilizes a "solid" core construction of stainless steel, cast iron, anodized aluminum or tinned copper in single or multi-ply construction. For example, layers of aluminum or copper may be sandwiched between stainless steel plates to improve thermal conductivity. Solid-core construction is safe and reliable. However, the multi-ply construction required to achieve thermal conductivity of a couple hundred W/m.K (Watt/meter.Kelvin) produces a heavy and expensive product. The current state-of-the art multi-ply construction has a maximum thermal conductivity of 390 W/m.K.

An alternative to conventional solid core cookware that promises much higher thermal conductivity is "heat pipe" cookware. Heat pipe cookware has inner and outer metal shells that define a hermetically sealed space. A working fluid partially fills the hermetically sealed space. By using the phenomenon where the working fluid in the hermetically sealed space is evaporated and condensed to undergo a phase change at a uniform temperature, the cookware can, in theory, maintain the same temperature over the entire surface of the inner shell, which exhibits the same effect as being made of an ideal material with infinite thermal conductivity. Even though the cookware is unevenly or locally heated by flames, electricity or induction from an external source, the cookware can maintain the internal surface at a uniform temperature.

A "wick" is used to improve the circulation of the working fluid within the hermetically sealed space. The wick may include a wire mesh screen at the height of the working fluid and a porous metal plate at the center of the hermetically sealed space. The condensed working fluid is collected at the lower center of the hermetically sealed space by means of gravity and/or the capillarly pressure of the screen and porous plate. A "wick" structure is needed to achieve high thermal conduction > 1,000 W/m.K. However, its construction is complicated and expensive, which reduces the reliability and safety of the cookware while greatly increasing cost. Heat pipe cookware is at risk for catastrophic dryout if circulation is stopped by the wick structure. For all of these reasons, heat pipe cookware is not commercially available. See U.S. Patents 3,791,372 and 4,296,729, WO publications 00/54638 and 01/26517 and German patent DE 3027006A1 for variants of heat pipe cookware. The document US 5716657 discloses a cookware with conduits for heating fluid.

### SUMMARY OF THE INVENTION

The following is a summary of the invention in order to provide a basic understanding of some aspects of the invention. This summary is not intended to identify key or critical elements of the invention or to delineate the scope of the invention. Its sole purpose is to present some concepts of the invention in a simplified form as a prelude to the more detailed description and the defining claims that are presented later.

The present invention provides safe, lightweight and inexpensive cookware with fast thermal response and uniform heating. This is accomplished using an oscillation mini-channel to transfer heat via convection from a direct heating region to an indirect heating region for cooking on both surfaces.

According to the invention, cookware comprises a metal plate including a direct heating region configured to receive heat directly from a heat source and an indirect heating region that together define a food-heating zone. An oscillation mini-channel embedded in the plate winds back-and-forth between said direct and indirect heating regions. An operating fluid that occupies 30-90 percent of the volume of the oscillation mini-channel is placed under vacuum to create vapor bubbles and liquid slugs that are interspersed throughout the oscillation mini-channel. The oscillation mini-channel is dimensioned to produce capillary forces that hold the liquid slugs in the mini-channel. Heating of the direct heating region creates oscillatory movements of the vapor bubbles and liquid slugs that transfers heat from the direct heating region to the indirect heating region to maintain a more uniform temperature across the food-heating zone. Heat transfer is due primarily to convection rather than phase change.

In certain embodiments, the cookware exhibits an effective thermal conductivity of at least 1,000 W/m.K, more preferably at least 1,500 W/m.K and possibly greater than 2,000 W/m.K.

In certain embodiments, the oscillation mini-channel is "wickless", and thus simpler and less expensive to implement safely and effectively.

In different embodiments, the cookware can be configured for use with an open flame, electric or induction heat source.

In different embodiments, the metal plate may of a single or multi-ply construction. A single ply construction of stainless steel or aluminum may be used.

According to the invention, the oscillation mini-channel is closed loop. The oscillation mini-channel is implemented by embedding a tube, such as a copper tube, in the metal plate. The oscillation mini-channel may be configured such that the direct and indirect heating regions are interchangeable (e.g., a griddle). A second oscillation mini-channel may be embedded in the metal plate 90 degrees to the first oscillation mini-channel such that the cookware (e.g., a griddle) can be placed with various orientations with respect to the heat source and to improve overall uniformity of heat transfer.

In different embodiments, the operating fluid may, for example, be water, a type of silicon oil or a type of lubricant oil.

These and other features and advantages of the invention will be apparent to those skilled in the art from the following detailed description of preferred embodiments, taken together with the accompanying drawings, in which:

### BRIEF DESCRIPTION OF THE DRAWINGS

FIG. 1 is diagram of an embodiment of oscillation mini-channel cookware;
FIGs. 2a-2c are perspective, open plan and section views of an embodiment of an oscillation mini-channel griddle;
FIGs. 3a-3c are perspective, open plan and section views of an embodiment of an oscillation mini-channel griddle having a pair of oscillation mini-channels oriented longitudinally and transversely, respectively;
FIG. 4 is a diagram of a griddle and a local heat source for comparing solid-core griddle with an oscillation mini-channel griddle;
FIG. 5 is a Table of measurements for the oscillation mini-channel griddle to calculate an effective thermal conductivity;
FIG. 6 is a plot of griddle temperatures directly above the local heat source and at the opposite end of the griddle for the multi-ply solid-core and oscillation mini-channel cookware, respectfully; and
FIGs. 7a and 7b are different views of an embodiment of an oscillation mini-channel pot.

### DETAILED DESCRIPTION OF THE INVENTION

The present invention provides safe, lightweight and inexpensive cookware with fast thermal response and uniform heating. This is accomplished using an oscillation mini-channel to transfer heat via convection from a direct heating region to an indirect heating region for cooking on both surfaces. In certain embodiments, the oscillation mini-channel is "wickless", and thus simpler and less expensive to implement safely and effectively.

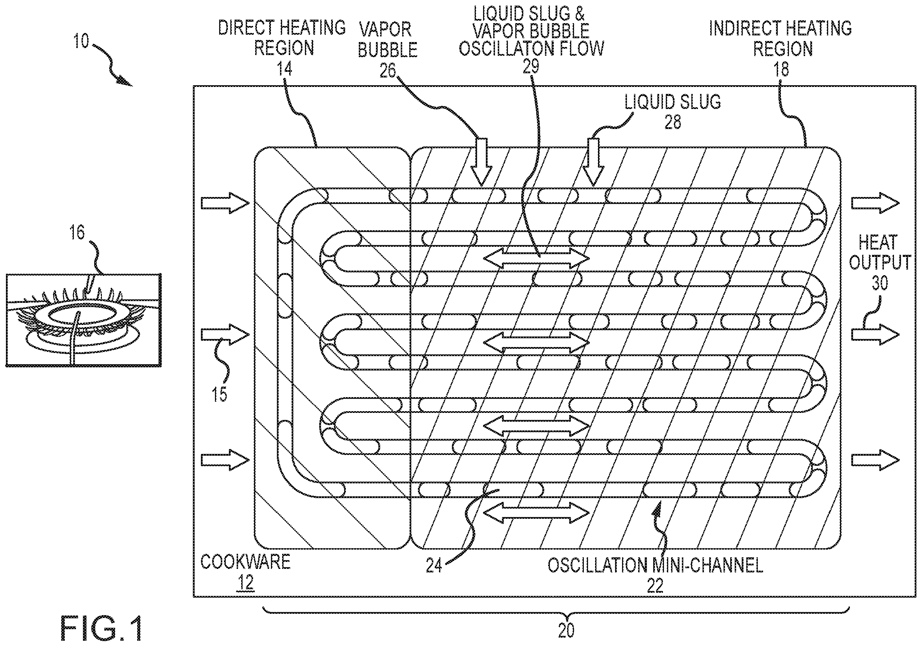

In reference to Figure 1, cookware **10** includes a metal plate **12** having a direct heating region **14** configured to receive heat energy **15** directly from a heat source **16** and an indirect heating region **18.** Together the direct and indirect heating regions **14** and **18** define a food-heating zone **20.** A "wickless" oscillation mini-channel (OMC) **22** embedded in the plate **12** winds back-and-forth between the direct and indirect heating regions. An operating fluid **24** that occupies 30-90 percent of the volume of the oscillation mini-channel is placed under vacuum to create vapor bubbles **26** and liquid slugs **28** that are interspersed throughout the oscillation mini-channel. The oscillation mini-channel is dimensioned to produce capillary forces that hold the liquid slugs **28** in the mini-channel. Heating of the direct heating region **14** creates oscillatory movements **29** of the vapor bubbles **26** and liquid slugs **28** that transfers heat **30** from the direct heating region **14** to the indirect heating region **18** to maintain a more uniform temperature across the food-heating zone **20.** Heat transfer is due primarily to convection rather than a phase change. The cookware may exhibit an effective thermal conductivity of at least 1,000 W/m.K (Watts per meter-Kelvin), possibly greater than 1,500 W/m.K and most preferably greater than 2,000 W/m.K.

The cookware **10** may be a single-ply metal plate **12** such as stainless steel, cast iron or aluminum or may be a multi-ply metal plate **12** such as layers of stainless steel, aluminum and copper. The cookware **10,** at least the direct heating region **14,** may be formed of a ferromagnetic metal suitable for use with an induction heating element.

The cookware **10** may include a continuous length of tubing, such as copper tubing, that defines OMC **22.** The material in contact with the operating fluid **24** must be inert, not interact with the operating fluid **24.** Alternately, according to an embodiment not part of the invention, the cookware may include at least two plates, at least one of which is etched/machined to define the OMC **22,** in which case the plate material (or coating thereon) must be inert.

The cookware **10** may be a griddle in which case the food-heating zone is a flat surface that is larger than the heating element. To cook food over the entire food-heating zone, the OMC **22** transfers heat from the direct heating region to the remote indirect heating region. The high effective thermal conductivity ensures more uniform heating over the entire food-heating zone. OMC **22** is suitably configured with a symmetry such that the direct and indirect heating regions are interchangeable so that the cook can place either end of the griddle over the heating element. A second OMC may be embedded in the cookware at an approximately 90-degree orientation to OMC **22.** The second OMC would facilitate heat transfer from the top to the bottom sides of the griddle, allowing the cook greater flexibility to orient the griddle on the stovetop, and improved uniformity of heat transfer.

The cookware **10** may be a pot in which case the food-heating zone is the volume of the pot. The pot's bottom surface defines the direct heating region and its sidewalls the indirect heating region. The OMC **22** transfers heat from its bottom surface up its sidewalls. The high effective thermal conductivity ensures more uniform heating over the entire food-heating zone. OMC **22** is naturally configured with a symmetry that allows the pot to be placed with any orientation relative to the heating element.

The cookware **10** may be provided with one and only one OMC **22.** The OMC **22** is itself a very simple, inexpensive and safe structure. Pulling a vacuum and sealing the OMC **22** can be the most complicated and expensive aspect of implementing the cookware. Hence, in many applications a single OMC **22** is both sufficient and preferred. In other applications, the cookware may be configured with multiple OMCs.

The OMC **22** includes operating fluid **24,** such as water or silicone oil, that normally separates into liquid slugs **28** that are spaced apart and separated by vapor bubbles **26.** The OMC **22** typically includes a meandering tube of capillary dimensions and many turns (e.g. parallel tube sections connected by U-turn tube sections) back-and-forth between direct heating region **14** and indirect heating region **18,** where heat received at the direct heating region causes the liquid slugs and vapor bubbles to oscillate due to pressure pulsations created by the absorbed heat. As such, the pressure pulsations force the liquid slugs and vapor bubbles to move between the direct heating region **14** and the indirect heating region **18.** As heat is applied to the OMC **22** in the direct heating region **14** such as by the transfer of heat from heat source **16** (e.g., an open-flame, electric or inductive heating element), at least some of the liquid is vaporized in the direct heating region **14.** Upon reaching the indirect heating region **18,** in which the indirect heating region **18** is generally cooler than the vapor arriving from the direct heating region **14,** at least some of the vapor condenses into liquid. The volume expansion due to the vaporization and contraction due to the condensation causes the oscillating motion of the operating fluid that sends vapor to the indirect heating region **18** and returns liquid to the direct heating region **14.** The oscillatory motion of the liquid slugs and vapor bubbles is self-sustaining as long as the heating and cooling conditions are maintained. Therefore, the OMC **22** is self-sufficient and does not require any external mechanical devices (e.g., pumps) or energy to operate.

The OMC **22** of the present invention should not be limited to any particular configuration, as the OMC could be any number of sizes and configurations in additional embodiments of the present invention. For instance, the OMC **22** could be various dimensions, the tube could have various diameters and configurations, and the direct heating region **14** and the indirect heating region **18** could have various lengths and numbers of turns. Moreover, the quantity of operating fluid (i.e., charge ratio), types and properties of the operating fluid, and tube material may be modified to generate different heat transfer results. According to the invention, the filling ratio could be approximately 30-90%, while the tube could be a copper material with approximately 3-4 mm in outer diameter and a 1-2 mm in inner diameter. In addition, the OMC **22** is closed-loop, oriented in various positions.

The OMC **22** can be specified by the number of OMC turns (counted by two parallel tubes and one bend, or a U shape tube on one side of the OMC). Each turn can transfer approximately 50W of heat using water as the operating fluid. For a 2KW stove, up to half of the heat (1KW) will be input in the OMC. As a result, 20 turns are needed. For some applications, the OMC can be formed from tubing embedded in the cookware. Tubing is safe, reliable and inexpensive. If a high density OMC is needed, the OMC, in an embodiment not forming part of the invention, can be etched/machined on the metal plate/cookware substrate, rather than bending/embedding a tube with the minimal radius requirement. The etched or machined channels can be very compact and allow higher heat transfer.

As a result, the oscillation mini-channel cookware has a much higher effective thermal conductivity (K_{eff}) than any commercially available solid-core cookware. We have demonstrated K_{eff} > 1,200 W/m.K, and can achieve K_{eff} > 2,000 W/m.K. By comparison, stainless steel is approximately 18 W/m.K, cast iron is approximately 40 W/m.K and multi-ply constructions of aluminum and copper have a maximum of 200 W/m.K. Furthermore, oscillation mini-channel cookware can be significantly lighter weight and less expensive than the multi-ply higher performing cookware.

As compared to designed but not commercially available heat-pipe cookware, oscillation mini-channel cookware may embody a simple "wickless" structure that is safe and reliable to implement and use, and thus considerably less expensive. Furthermore, because the charge ratio of the operating fluid in the OMC is much higher than a conventional heat pipe, the frequent oscillatory movements of the liquid slugs can pass high mass flow through the direct heat region. High mass flow corresponds to high heat transfer. Thus, the OMC can exhibit a higher effective thermal conductivity than the heat pipe.

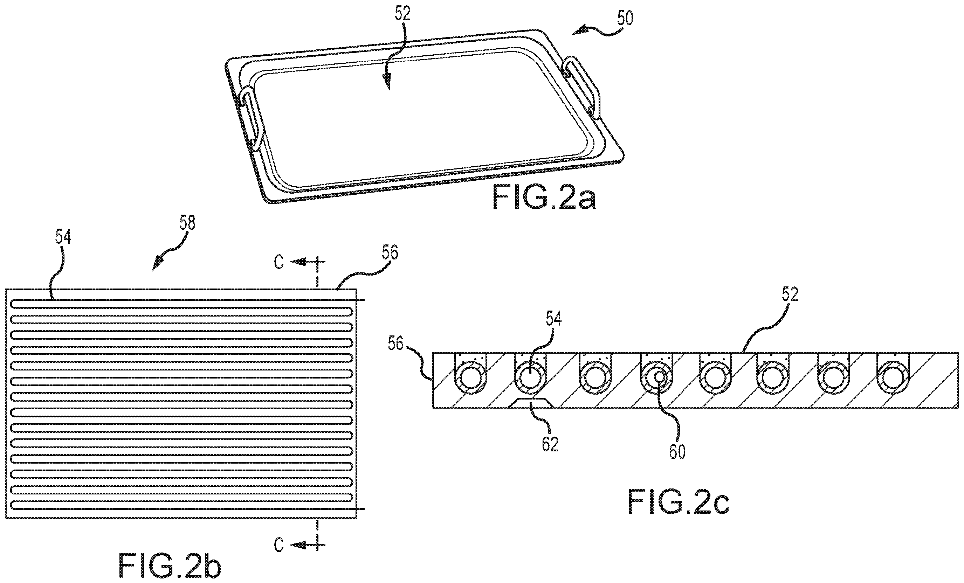

Referring now to Figures 2a-2c, an embodiment of OMC cookware is configured as a griddle **50.** The griddle is dimensioned with a flat cooking surface **52** such that it is much longer, and possibly wider, than a typical heating element on a stove. A continuous copper tube **54** is embedded in a stainless steel plate **56** to form a single open-loop OMC **58** that winds back-and-forth from one end of the griddle to the other to cover the flat cooking surface **52.** An operating fluid **60** fills the OMC **58** with a charge ratio between 30 and 90%. The copper tube is dimensioned to produce capillary forces that create vapor bubbles and liquid slugs interspersed throughout the oscillating mini-channel. A check valve **62** may be coupled to the tubing to vent operating fluid should the pressure in the OMC exceed a safety threshold. Either end of the griddle may be placed over the heating element. Oscillatory movements of the vapor bubbles and liquid slugs transfer heat from one end of the griddle to the other. The high effective thermal conduction reduces the temperature differential over the cooking surface to achieve more effective cooking.

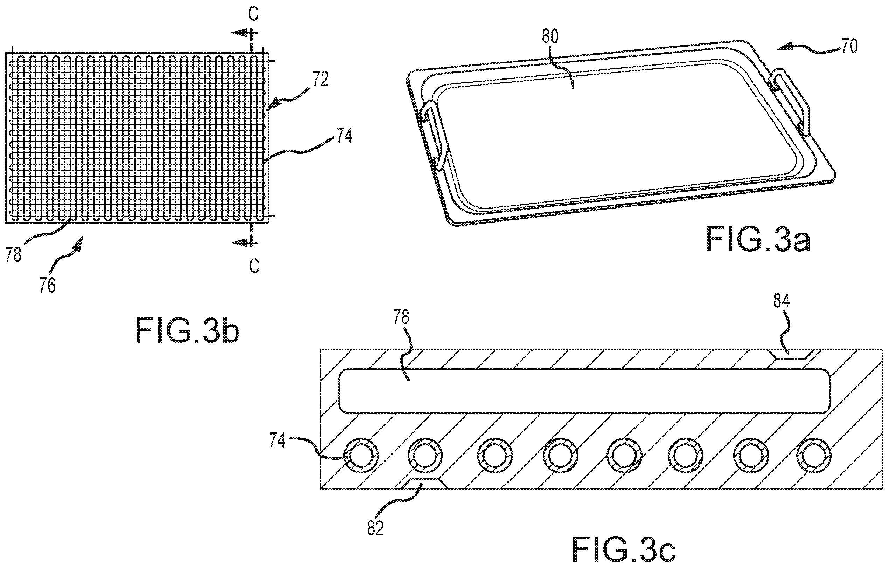

Referring now to Figures 3a-3c, an embodiment of OMC cookware is configured as a griddle **70** in which a first OMC **72** includes parallel sections of tubing **74** that run longitudinally from one end of the griddle to the other and a second OMC **76** includes parallel sections of tubing **78** that run transversely across the griddle. This combination of a pair of perpendicularly oriented OMCs improves heat transfer, hence temperature uniformity across the entire cooking surface **80** and specifically allows a cook to place either end or either side over the heating element. Each OMC is filled with an operating fluid with a charge ratio between 30 and 90%. Check valves **82** and **84** are coupled to each OMC.

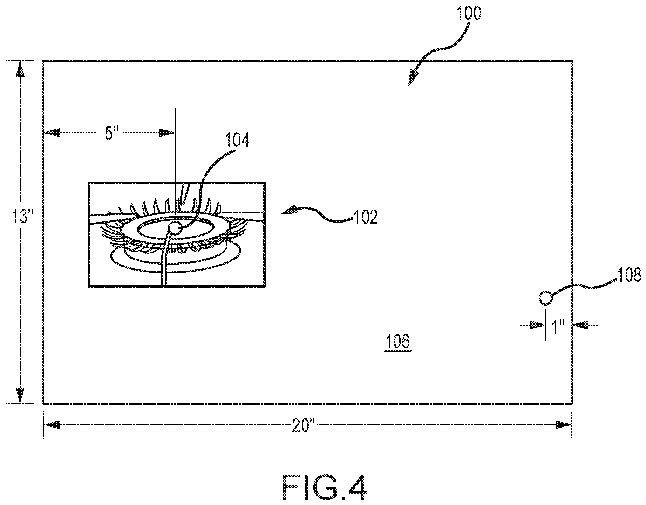

Referring now to Figures 4, 5 and 6, a standard sized griddle **100** and open flame heating element **102** (approximately 1,500 W) were defined to determine the effective thermal conductivity of an OMC griddle and to compare the heating characteristics of the OMC griddle and a multi-ply aluminum/copper griddle. The griddle **100** was 51 cm (20") in length and 33 cm (13") wide. The heating element **102** is placed one end of the griddle. A first thermocouple **104** is attached to the cooking surface **106** directly above the heating element. A second thermocouple **108** is attached near the other end of the griddle.

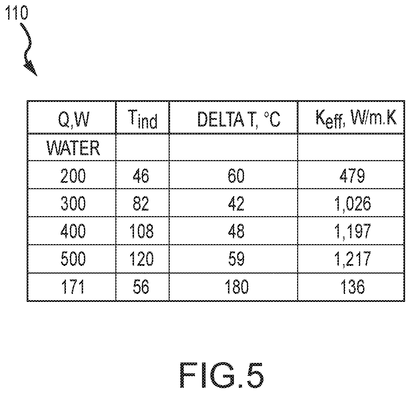

As shown in Table **110** in Figure 5, an OMC griddle of the type illustrated in Figure 2 was tested at different heat loads Q (i.e., how high the flame is turned up). The temperatures of the cooking surface provided by the first and second thermocouples provide the absolute temperature Tind of the indirect heating region at the remote end of the griddle and a temperature difference Delta T between the direct and indirect heating regions. This temperature difference is used to compute the effective thermal conductivity K_{eff} under those conditions. At relatively low heat loads (low flame), the temperature difference is relatively high and the effective thermal conductivity is relatively poor. If the input heat load is too low, oscillation of the vapor bubbles and liquid slugs is not activated and heat transfer is poor. Once the input heat load exceeds a threshold, oscillation is activated and heat transfer improved dramatically. The steady-state K_{eff} is > 1,000 W/m.K for this example. This represents a dramatic improvement over the current state-of-the-art for solid-core cookware, a maximum of 200 W/m.K for the most expensive multi-ply cookware.

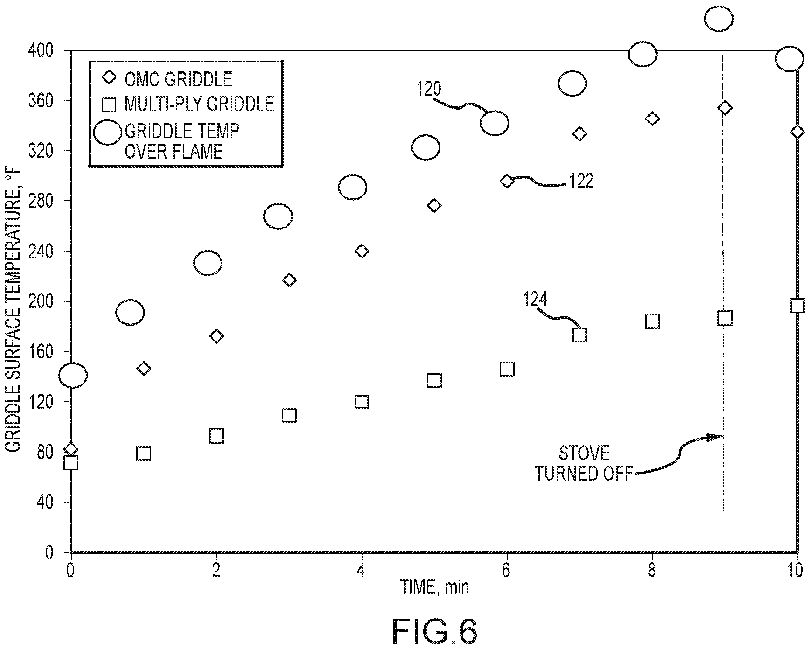

This dramatic improvement is demonstrated in the test results plotted in Figure 6 for the OMC griddle and a state-of-the-art multi-ply griddle. At a heat load input sufficient to activate the oscillatory movement, the measured surface temperature **120** at the remote end of the OMC griddle was consistently approximately 40°C less than the measured surface temperature **122** directly over the flame. Conversely, for the same heat load input the measured surface temperature **124** at the remote end of the multi-ply griddle was much lower and could not keep up with the increase in surface temperature due to its low K_{eff}. At the point the stove was turned off, surface temperature **124** was over 250°F less than the measured surface temperature **122** directly over the flame.

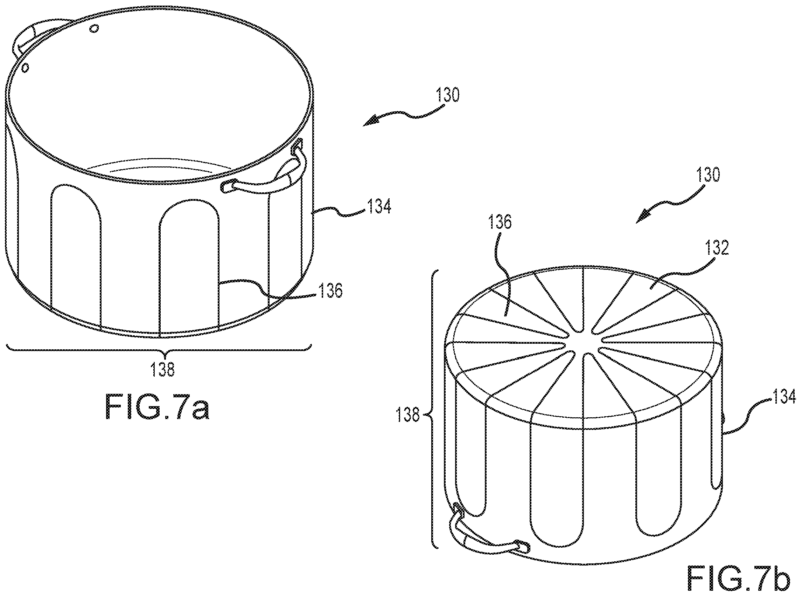

Referring now to Figures 7a-7b, an embodiment of OMC cookware is configured as a pot **130.** Pot **130** includes a bottom heating surface **132** (direct heating region) and sidewalls **134** (indirect heating region). An embedded continuous copper tube **136** winds back-and-forth between the center of bottom heating surface **134** and the top of sidewalls **134** circling pot **130** to define an operating mini-channel **138.** An operating fluid fills the OMC with a charge ratio between 30 and 90%. The copper tube is dimensioned to produce capillary forces that create vapor bubbles and liquid slugs interspersed throughout the oscillating mini-channel. Oscillatory movements of the vapor bubbles and liquid slugs transfer heat from bottom heating surface **132** to sidewalls **134.** The high effective thermal conduction reduces the temperature differential over the cooking surface to achieve more effective cooking.

While several illustrative embodiments of the invention have been shown and described, numerous variations and alternate embodiments will occur to those skilled in the art within the scope of the invention as defined in the appended claims.

## Claims

1. Cookware (10), comprising:
a metal plate (12) comprising a direct heating region (14) configured to receive heat energy (15) directly from a heat source (16) and an indirect heating region (18), said direct and indirect heating regions together defining a food-heating zone (20);
an oscillation mini-channel (22) embedded in said metal plate (12), said oscillation mini-channel winding back-and-forth between said direct and indirect heating regions (16, 18), wherein the oscillation mini-channel is a closed -loop implemented by embedding a tube in the metal plate; and
an operating fluid (24) that occupies 30-90 percent of the volume of the oscillating mini-channel under vacuum, said oscillation mini-channel dimensions to produce capillary forces that create vapor bubbles and liquid slugs interspersed throughout the oscillating mini-channel;
wherein oscillatory movements of the vapor bubbles and liquid slugs transfer heat from the direct heating region to the indirect heating region to heat the food-heating zone.

2. The cookware of claim 1, wherein said cookware exhibits an effective thermal conductivity of at least 1 ,000 W/m.K.

3. The cookware of claim 1, wherein said cookware includes a single oscillation mini-channel.

4. The cookware of claim 1, wherein said oscillation mini-channel has at least four turns from the direct heating region to the indirect heating region.

5. The cookware of claim 4, wherein said oscillation mini-channel comprises straight parallel sections connected by u-shaped sections.

6. The cookware of claim 1, wherein said metal plate is single-ply.

7. The cookware of claim 1, wherein said metal plate is multi-ply comprising multiple layers of different types of metal.

8. The cookware of claim 1, wherein at least said direct heating region of said metal plate comprises a ferromagnetic metal.

9. The cookware of claim 1, in which the cookware is a griddle having a flat food-heating zone.

10. The cookware of claim 9, wherein said oscillation mini-channel is configured such that said direct heating zone and indirect heating zone are interchangeable.

11. The cookware of claim 9, further comprising a second oscillation mini-channel oriented approximately orthogonal to the oscillation mini-channel.

12. The cookware of claim 1, in which the cookware is a pot in which the direct heating region is a flat bottom surface of the pot and the indirect heating region are side walls of the pot such that the food-heating zone is the volume of the pot.

## Patentansprüche

1. Kochgeschirr (10), umfassend:
eine Metallplatte (12), umfassend einen direkten Erwärmungsbereich (14), der konfiguriert ist, um Wärmeenergie (15) direkt von einer Wärmequelle (16) aufzunehmen, und einen indirekten Erwärmungsbereich (18), wobei der direkte und der indirekte Erwärmungsbereich zusammen eine Lebensmittelerwärmungszone (20) definieren;
einen Schwingungsminikanal (22), der in die Metallplatte (12) eingebettet ist, wobei der Schwingungsminikanal zwischen dem direkten und dem indirekten Erwärmungsbereich (16, 18) hin- und hergewickelt ist, wobei der Schwingungsminikanal eine geschlossene Schleife ist, die durch Einbetten einer Röhre in die Metallplatte implementiert wird; und
ein Betriebsfluid (24), das 30-90 Prozent des Volumens des Schwingungsminikanals unter Vakuum einnimmt, wobei die Schwingungsminikanalabmessungen dazu dienen, Kapillarkräfte zu erzeugen, die Dampfblasen und Flüssigkeitspfropfen schaffen, die überall in dem Schwingungsminikanal verteilt sind;
wobei Schwingungsbewegungen der Dampfblasen und Flüssigkeitspfropfen Wärme von dem direkten Erwärmungsbereich auf den indirekten Erwärmungsbereich übertragen, um die Lebensmittelerwärmungszone zu erwärmen.

2. Kochgeschirr nach Anspruch 1, wobei das Kochgeschirr eine effektive thermische Leitfähigkeit von mindestens 1.000 W/m.K vorweist.

3. Kochgeschirr nach Anspruch 1, wobei das Kochgeschirr einen einzigen Schwingungsminikanal einschließt.

4. Kochgeschirr nach Anspruch 1, wobei der Schwingungsminikanal mindestens vier Windungen von dem direkten Erwärmungsbereich zu dem indirekten Erwärmungsbereich aufweist.

5. Kochgeschirr nach Anspruch 4, wobei der Schwingungsminikanal gerade parallele Abschnitte umfasst, die durch U-förmige Abschnitte verbunden sind.

6. Kochgeschirr nach Anspruch 1, wobei die Metallplatte einlagig ist.

7. Kochgeschirr nach Anspruch 1, wobei die Metallplatte mehrlagig ist, umfassend mehrere Schichten von unterschiedlichen Arten von Metall.

8. Kochgeschirr nach Anspruch 1, wobei mindestens der direkte Erwärmungsbereich der Metallplatte ein ferromagnetisches Metall umfasst.

9. Kochgeschirr nach Anspruch 1, wobei das Kochgeschirr eine Grillplatte ist, die eine flache Lebensmittelerwärmungszone aufweist.

10. Kochgeschirr nach Anspruch 9, wobei der Schwingungsminikanal derart konfiguriert ist, dass die direkte Erwärmungszone und die indirekte Erwärmungszone austauschbar sind.

11. Kochgeschirr nach Anspruch 9, ferner umfassend einen zweiten Schwingungsminikanal, der ungefähr orthogonal zu dem Schwingungsminikanal ausgerichtet ist.

12. Kochgeschirr nach Anspruch 1, wobei das Kochgeschirr ein Topf ist, in dem der direkte Erwärmungsbereich eine flache Bodenoberfläche des Topfes ist und der indirekte Erwärmungsbereich Seitenwände des Topfes derart sind, dass die Lebensmittelerwärmungszone das Volumen des Topfes ist.

## Revendications

1. Batterie de cuisine (10), comprenant :
une plaque métallique (12) comprenant une région de chauffage direct (14) conçue pour recevoir de l'énergie thermique (15) directement d'une source de chaleur (16) et une région de chauffage indirect (18), lesdites régions de chauffage direct et indirect définissant ensemble une zone de chauffage d'aliments (20) ;
un mini-canal d'oscillation (22) intégré dans ladite plaque métallique (12), ledit mini-canal d'oscillation s'enroulant dans les deux sens entre lesdites régions de chauffage direct et indirect (16, 18), dans laquelle le mini-canal d'oscillation est une boucle fermée mise en oeuvre par l'intégration d'un tube dans la plaque métallique ; et
un fluide de fonctionnement (24) qui occupe 30 à 90 pour cent du volume du mini-canal oscillant sous vide, les dimensions dudit mini-canal d'oscillation permettant de produire des forces capillaires qui créent des bulles de vapeur et des bouchons de liquide dispersés dans l'ensemble du mini-canal oscillant ;
dans laquelle des mouvements oscillatoires des bulles de vapeur et des bouchons de liquide transfèrent la chaleur de la région de chauffage direct à la région de chauffage indirect pour chauffer la zone de chauffage d'aliments.

2. Batterie de cuisson selon la revendication 1, dans laquelle ladite batterie de cuisson présente une conductivité thermique effective d'au moins 1 000 W/m.K.

3. Batterie de cuisson selon la revendication 1, dans laquelle ladite batterie de cuisson comporte un mini-canal d'oscillation unique.

4. Batterie de cuisson selon la revendication 1, dans laquelle ledit mini-canal d'oscillation a au moins quatre tours de la région de chauffage direct à la région de chauffage indirect.

5. Batterie de cuisson selon la revendication 4, dans laquelle ledit mini-canal d'oscillation comprend des sections parallèles droites reliées par des sections en forme de u.

6. Batterie de cuisson selon la revendication 1, dans laquelle ladite plaque métallique est monocouche.

7. Batterie de cuisson selon la revendication 1, dans laquelle ladite plaque métallique est multicouche comprenant de multiples couches de différents types de métal.

8. Batterie de cuisson selon la revendication 1, dans laquelle au moins ladite région de chauffage direct de ladite plaque métallique comprend un métal ferromagnétique.

9. Batterie de cuisson selon la revendication 1, dans laquelle la batterie de cuisson est une plaque chauffante ayant une zone plate de chauffage d'aliments.

10. Batterie de cuisson selon la revendication 9, dans laquelle ledit mini-canal d'oscillation est conçu de telle sorte que ladite zone de chauffage direct et ladite zone de chauffage indirect sont interchangeables.

11. Batterie de cuisson selon la revendication 9, comprenant en outre un second mini-canal d'oscillation orienté approximativement orthogonalement au mini-canal d'oscillation.

12. Batterie de cuisson selon la revendication 1, dans laquelle la batterie de cuisson est une casserole dans laquelle la région de chauffage direct est une surface de fond plate de la casserole et la région de chauffage indirect correspond aux parois latérales de la casserole de telle sorte que la zone de chauffage d'aliments est le volume de la casserole.
